# FASCICULE DE BREVET EUROPEEN

(11) **EP 3 812 871 B1**
(45) Date de publication et mention de la délivrance du brevet: **09.09.2026**
(21) Numéro de dépôt: 20203647.1
(22) Date de dépôt: 23.10.2020
(51) Int. Cl.: G05D 11/13

(54) **PROCÉDÉ DE DOSAGE ET INSTALLATION ASSOCIÉE**
DOSIERVERFAHREN UND ENTSPRECHENDE ANLAGE
DISPENSING METHOD AND ASSOCIATED INSTALLATION

(30) Priorité: 24.10.2019 FR 1911907
(43) Date de publication de la demande: 28.04.2021
(73) Titulaire: Exel Industries, 51200 Epernay (FR)
(72) Inventeur: COGNON, Thibault, 75009 Paris (FR)
(74) Mandataire: Lavoix

(56) Documents cités:
- US-A- 5 629 863
- US-A- 5 868 177
- US-A1- 2003 071 062
- US-A1- 2011 218 678
- US-A1- 2015 146 498

## Description

La présente invention concerne un procédé de dosage d'un produit d'injection dans un produit de base, notamment pour la production d'un produit de peinture de finition et/ou de protection.

L'invention concerne en outre une installation de dosage associée.

Actuellement, un flux continu de produit de base est généré, une quantité de produit d'injection étant injectée via une vanne d'injection dans le produit de base à intervalle régulier en fonction de la quantité de produit de base écoulée pendant l'intervalle précédent.

Cela permet d'obtenir une proportion souhaitée entre le produit de base et le produit d'injection.

Cependant, il est difficile de contrôler la quantité de produit d'injection injectée.

D'une part, la durée d'injection du produit d'injection doit être ajustée à la fois en fonction de la quantité de produit de base écoulé pendant l'intervalle, ainsi qu'en fonction du débit du produit d'injection pendant l'injection.

D'autre part, la durée d'injection est typiquement plutôt courte par rapport au mode de fonctionnement de la vanne d'injection. Ainsi, un ajustement théorique très fin de la durée d'injection en fonction de la quantité de produit de base écoulée et du débit du produit d'injection est susceptible de ne pas être mise en œuvre correctement au niveau de la vanne d'injection.

US 2003/071062 A1 décrit un procédé de dosage proportionnel d'un premier et d'un second fluides qui sont délivrés par une première et une seconde pompes, respectivement, sur une série continue de cycles de dosage pour obtenir un rapport de mélange sélectionné, comprenant les étapes suivantes :
a) le fonctionnement simultané des première et deuxième pompes ;
b) la surveillance des quantités des premier et second fluides sorties par les première et seconde pompes pendant chaque cycle de dosage, respectivement;
c) l'arrêt de la première pompe tandis que la seconde pompe continue à fonctionner jusqu'à ce que le rapport de mélange sélectionné soit atteint pour un cycle de dosage actuel, puis le redémarrage de la première pompe pour commencer le cycle de dosage suivant ; et
d) la répétition continue de l'étape c) sur une base périodique.

US 2015/146498 A1 décrit un procédé de dosage, dans lequel un premier liquide est introduit dans un flux de deuxième liquide. Une fois la quantité souhaitée de produit d'injection injectée, la vanne d'injection est refermée. La quantité de deuxième liquide souhaitée est calculée en fonction de la quantité mesurée de premier liquide injecté. Lorsque cette quantité de deuxième liquide est délivrée, la vanne de la ligne de deuxième liquide est ensuite fermée.

Un but de l'invention est donc de fournir un procédé de dosage permettant d'améliorer la précision du dosage entre le produit de base et le produit d'injection.

A cet effet, l'invention a pour objet un procédé de dosage selon la revendication 1.

Selon des modes particuliers de réalisation, le procédé comprend l'une ou plusieurs des caractéristiques selon les revendications 2 à 6, prise(s) isolément ou selon toutes les combinaisons techniquement possibles.

L'invention sera mieux comprise à la lecture de la description qui va suivre, donnée uniquement à titre d'exemple et faite en se référant aux dessins annexés, sur lesquels :
[Fig 1] la figure 1 est une vue schématique d'une installation de dosage selon un premier mode de réalisation,
[Fig 2] la figure 2 est un organigramme d'un procédé de dosage selon un premier mode de réalisation, apte à être mis en œuvre par l'installation de dosage de la figure 1,
[Fig 3] la figure 3 est une vue schématique d'une installation de dosage selon un deuxième mode de réalisation, et
[Fig 4] la figure 4 est un organigramme d'un procédé de dosage selon un deuxième mode de réalisation, apte à être mis en œuvre par l'installation de dosage de la figure 3.

Les termes « amont » et « aval » s'entendent par la suite selon le sens usuel pour l'écoulement de fluide.

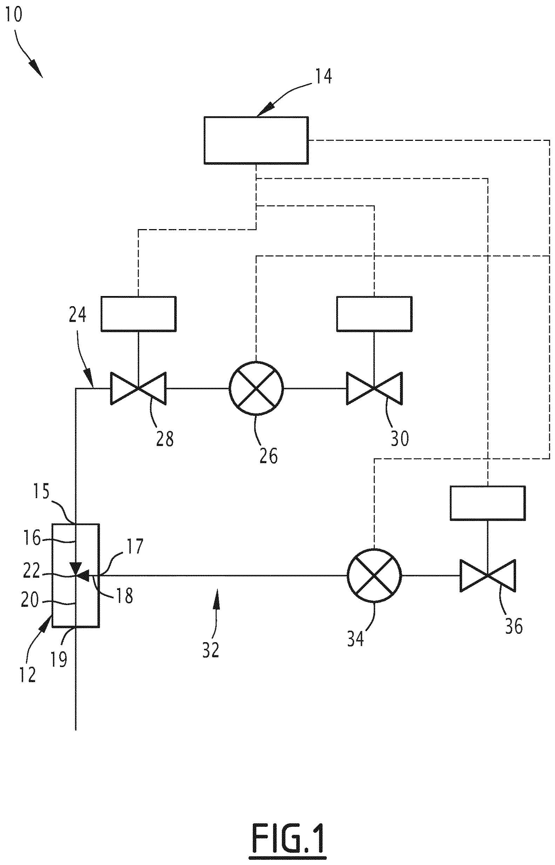

Un premier exemple d'installation de dosage 10 d'un produit d'injection dans un produit de base selon l'invention est représenté sur la figure 1.

Une telle installation permet de réaliser un mélange formant une peinture ou une base de peinture.

Le produit d'injection et le produit de base sont des produits fluides.

Le produit d'injection et le produit de base présentent une viscosité respective comprise entre 20 à 5000 centipoises.

L'installation de dosage 10 comprend au moins un, ici un, dispositif de mélange 12 d'un produit d'injection et d'un produit de base.

L'installation de dosage 10 comprend en outre un calculateur 14.

Le dispositif de mélange 12 comprend une entrée d'injection 15 alimentée en produit d'injection.

Le dispositif de mélange 12 comprend une ligne d'injection 16 s'étendant depuis l'entrée d'injection 15.

Le dispositif de mélange comprend une entrée de base 17 alimentée en produit de base.

Le dispositif de mélange 12 comprend une ligne de base 18 s'étendant depuis l'entrée de base 17.

Le dispositif de mélange 12 comprend en outre une sortie 19 prévue pour permettre la sortie d'un mélange du produit d'injection et du produit de base depuis le dispositif de mélange 12.

Le dispositif de mélange 12 comprend en outre une ligne de sortie 20.

La ligne d'injection 16 et la ligne de base 18 s'étendent chacune depuis l'entrée du dispositif de mélange respective 15, 17 jusqu'à une extrémité de mélange 22 confondue pour la ligne d'injection 16 et la ligne de base 18.

La ligne de sortie 20 s'étend depuis l'extrémité de mélange 22 à la sortie 19 du dispositif de mélange 12.

La ligne d'injection 16 et la ligne de base 18 se rencontrent au niveau de l'extrémité de mélange 22.

Le produit d'injection de la ligne d'injection 16 et le produit de base de la ligne de base 18 se combinent à l'extrémité de mélange 22 dans la voie de sortie 20.

L'entrée d'injection 15 est alimentée en produit d'injection par une voie d'injection 24.

La voie d'injection 24 est pourvue d'un dispositif de mesure 26 de la quantité Qᵢ, plus particulièrement de la quantité volumique, de produit d'injection traversant le dispositif de mesure.

La mesure du dispositif de mesure 26 est réalisée en continu ou régulièrement, par exemple à un intervalle régulier inférieur à une fréquence de 20 kHz.

Le dispositif de mesure 26 est ici placé à une distance de la vanne 28 inférieure à 100 centimètres.

Le dispositif de mesure 26 de la voie d'injection 24 est apte à transmettre la quantité mesurée au calculateur 14.

La voie d'injection 24 est en outre pourvue d'une vanne d'injection 28 entre le dispositif de mesure 26 et l'entrée d'injection 15, c'est-à-dire en aval du dispositif de mesure 26.

La vanne d'injection 28 est déplaçable entre une position ouverte, dans laquelle du produit d'injection s'écoule à travers la vanne, et une position fermée, dans laquelle le produit d'injection ne s'écoule pas à travers la vanne.

La vanne d'injection 28, plus particulièrement le déplacement de la vanne d'injection 28 entre la position ouverte et la position fermée, est contrôlable par le calculateur 14.

La voie d'injection 24 est en outre ici pourvue d'une vanne globale d'injection 30 en amont du dispositif de mesure 26.

La vanne globale d'injection 30 est déplaçable entre une position ouverte, dans laquelle du produit d'injection s'écoule à travers la vanne, et une position fermée, dans laquelle le produit d'injection ne s'écoule pas à travers la vanne.

La vanne globale d'injection 30 permet de contrôler l'entrée de produit d'injection dans la voie d'injection 24.

La vanne globale d'injection 30, plus particulièrement le déplacement de la vanne globale d'injection 30 entre la position ouverte et la position fermée, est contrôlable par le calculateur 14.

L'entrée de base 17 est alimentée en produit de base par une voie de base 32.

La voie de base 32 est pourvue d'un dispositif de mesure 34 de la quantité Q_{b}, plus particulièrement de la quantité volumique, de produit de base traversant le dispositif de mesure.

La mesure du dispositif de mesure 34 est réalisée en continu ou régulièrement, par exemple à un intervalle régulier inférieur à une fréquence de 20 kHz.

Le dispositif de mesure 34 est apte à communiquer la quantité mesurée au calculateur 14.

La voie de base 32 est ici dépourvue de vanne entre le dispositif de mesure 34 et l'entrée de base 17, c'est-à-dire en aval du dispositif de mesure 34.

La voie de base 32 est en outre ici pourvue d'une vanne globale de base 36 en amont du dispositif de mesure 34.

La vanne globale de base 36 est déplaçable entre une position ouverte, dans laquelle du produit de base s'écoule à travers la vanne, et une position fermée, dans laquelle le produit de base ne s'écoule pas à travers la vanne.

La vanne globale de base 36, plus particulièrement le déplacement de la vanne globale de base 36 entre la position ouverte et la position fermée, est contrôlable par le calculateur 14.

La vanne globale de base 36 permet de contrôler l'entrée de produit de base dans la voie de base 32.

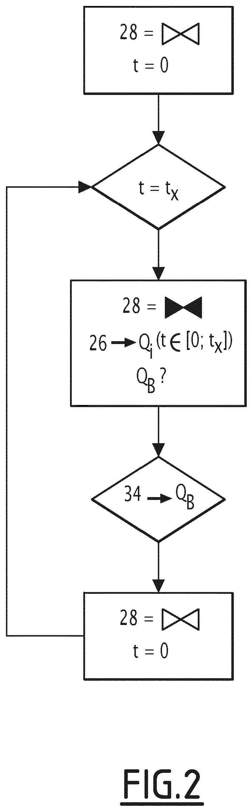

Un procédé de dosage d'un produit d'injection dans un produit de base, notamment pour la production d'un produit de peinture de finition et/ou de protection, selon un premier mode de réalisation va maintenant être décrit en regard de la figure 2.

Le procédé de dosage selon ce premier mode de réalisation est apte à être mise en œuvre par l'installation de dosage décrite précédemment.

Un dispositif de mélange 12 d'un produit d'injection et d'un produit de base, plus particulièrement une installation de dosage 10 telle que décrite précédemment est fourni.

Le procédé de dosage est ici mis en œuvre via le calculateur 14.

Le calculateur 14 comprend une horloge t.

La vanne globale d'injection 30 et la vanne globale de base 36 sont en position ouverte respective.

La vanne d'injection 28 est initialement en position fermée.

Un flux continu de produit de base est mis en place, plus particulièrement dans la ligne de base 18 du dispositif de mélange 12 via la voie de base 32.

Le flux continu de produit de base présente un débit compris entre 2mL/min à 10 L/min.

La quantité de produit de base du flux continu s'écoulant est mesurée via le dispositif de mesure 34 de la voie de base 32.

La mesure du dispositif de mesure 34 est réalisée en continu ou régulièrement, par exemple à un intervalle régulier inférieur à une fréquence de 20 kHz.

Au début d'une étape d'injection, la vanne d'injection 28 est déplacée en position ouverte, plus particulièrement via le calculateur 14.

Du produit d'injection est injecté dans le flux continu du produit de base, plus particulièrement au niveau de l'extrémité de mélange 22, pendant l'étape d'injection.

La vanne d'injection 28 est déplacée en position fermée après un temps tₓ donné.

Du produit d'injection est injecté dans le flux continu du produit de base pendant le temps donné tₓ, correspondant ici à l'étape d'injection.

Le temps donné tₓ est compris entre 0,01 et 10 secondes.

Plus particulièrement, lorsque la vanne d'injection 28 est déplacée en position ouverte, le calculateur 14 initialise l'horloge t à zéro.

Lorsque l'horloge t atteint la valeur du temps donné tₓ, la vanne d'injection 28 est déplacée en position fermée. Ainsi, seul le flux continu du produit de base s'écoule alors.

Alternativement, l'horloge t n'est pas initialisée au début de l'étape d'injection, le calculateur 14 détectant l'augmentation de l'horloge t d'une variation tₓ depuis le début de l'étape d'injection.

Le dispositif de mesure 26 de la voie d'injection 24 fournit la mesure de la quantité de produit d'injection ayant traversé le dispositif de mesure 26 pendant l'étape d'injection, c'est-à-dire pendant le temps donné tₓ : Qᵢ(t∈[0 ; tₓ]).

On considère que la quantité de produit d'injection ayant traversé le dispositif de mesure 26 pendant l'étape d'injection est égale à la quantité de produit d'injection ayant été injecté dans le flux continu de produit de base dans le même temps.

Notamment, le produit d'injection n'est pas compressible dans des conditions d'utilisation normales. En outre, il n'y a pas de fuite de produit d'injection entre le dispositif de mesure 26 et l'extrémité de mélange.

La mesure fournit la quantité de produit d'injection ayant été injecté dans le flux continu de produit de base.

Une quantité de produit de base souhaitée est calculée en fonction de la quantité de produit d'injection injectée pendant le temps donné Qᵢ(t∈[0 ; tₓ]).

Plus particulièrement, un ratio de quantité souhaité entre le produit de base et le produit d'injection, plus particulièrement du produit de base sur le produit d'injection, est prédéterminé ou programmé préalablement.

Par exemple, le ratio B:I de quantité souhaité du produit de base sur le produit d'injection est supérieur ou égal à 2.

La quantité de produit de base souhaitée Q_{B} est alors égale au produit du ratio B:I souhaité et de la quantité de produit d'injection injectée pendant le temps donné Qᵢ(t∈[0 ; tₓ]).

On écrit alors : ${Q}_{B} = B : I \times {Q}_{i} \left(t∈\left[0; {t}_{x}\right]\right)$

Lorsque la quantité de produit de base mesurée par le dispositif de mesure 34 depuis le début de l'étape d'injection est égale à Q_{B}, alors le procédé de dosage recommence au début de l'étape d'injection.

On considère que la quantité de produit de base mesurée par le dispositif de mesure 34 correspond à la quantité de produit de base s'étant écoulé dans le flux continu.

Notamment, le produit de base n'est pas compressible dans des conditions d'utilisation normales. En outre, il n'y a pas de fuite de produit de base entre le dispositif de mesure 34 et l'extrémité de mélange.

Dans un mode de réalisation, la mesure de la quantité de produit de base s'écoulant à travers le dispositif de mesure 34 est réalisée à intervalle régulier. Il est alors considéré que, la quantité de produit de base mesurée par le dispositif de mesure 34 depuis le début de l'étape d'injection est égale à Q_{B}, lorsque celle-ci est en effet égale à Q_{B} ou à la première mesure pour laquelle la quantité mesurée est supérieure à Q_{B}, cela signifiant que la valeur Q_{B} vient d'être dépassée.

Ainsi, le procédé de dosage comprend une itération des étapes suivantes :
- injection du produit d'injection dans le flux continu de produit de base pendant le temps donné tₓ,
- mesure de la quantité de produit d'injection injectée pendant le temps donné tₓ,
- calcul de la quantité de produit de base souhaitée en fonction de la quantité de produit d'injection injectée, et
- écoulement du flux continu seul jusqu'à ce que la quantité de produit de base s'étant écoulé depuis le début de l'itération soit égale à la quantité de produit de base souhaitée.

Au début de chaque itération de l'étape d'injection, la vanne d'injection 28 est déplacée en position ouverte pour le temps donné tₓ. Dans le mode de réalisation représenté, l'horloge du calculateur 14 est, en outre, réinitialisée à chaque itération.

Le temps donné tₓ est identique pour toutes les itérations.

Le produit d'injection est injecté dans le produit de base uniquement pendant les étapes d'injection.

Les étapes sont réitérées successivement tant qu'un utilisateur souhaite du mélange du produit de base et du produit d'injection.

Ainsi, à chaque itération, il est injecté une quantité Qᵢ(t∈[0 ; tₓ]) de produit d'injection dans une quantité Q_{B} de produit de base s'étant écoulé dans le flux continu.

Pour chaque itération, il est donc obtenu un ratio de quantité entre le produit de base et le produit d'injection égal au ratio souhaité B:I.

Par ailleurs, ce procédé permet un dosage précis dans la mesure où la durée de l'étape d'injection est fixe et ne nécessite pas un ajustement à chaque itération de la durée d'ouverture de la vanne.

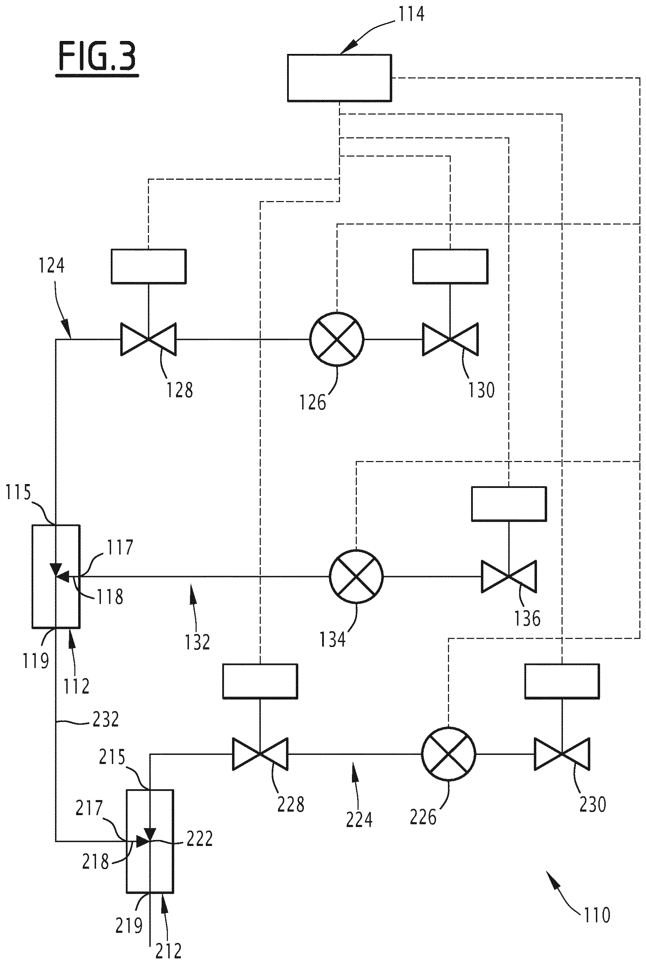

Un deuxième mode de réalisation d'installation de dosage selon l'invention va maintenant être décrit en regard de la figure 3.

L'installation de dosage 110 comprend ici au moins deux, plus particulièrement ici deux, dispositifs de mélange 112, 212 d'un produit d'injection respectif et d'un produit de base respectif.

L'installation de dosage 110 comprend en outre un calculateur 114.

Chaque dispositif de mélange 112, 212 comprend une entrée de produit d'injection 115, 215, une entrée de produit de base 117, 217 et une sortie 119, 219 d'un mélange du produit d'injection et du produit de base.

Chacun des dispositifs de mélange 112, 212 est identique au dispositif de mélange décrit en regard du premier mode de réalisation.

Un premier des dispositifs de mélange 112 est alimenté par des voies d'injection 124 et de base 132 similaires à celles décrites en regard du premier mode de réalisation.

Plus particulièrement, la voie d'injection 124 est pourvue d'un dispositif de mesure 126 de la quantité de produit d'injection le traversant, d'une vanne d'injection 128 en aval du dispositif de mesure 126 et, dans le présent exemple, d'une vanne globale d'injection 130 en amont du dispositif de mesure 126.

La voie de base 132 est en outre pourvue d'un dispositif de mesure 134 de la quantité de produit de base le traversant et, dans le présent exemple, d'une vanne globale de base 136 en amont du dispositif de mesure 134.

La sortie 119 du premier dispositif de mélange 112 est ici reliée fluidiquement à l'entrée du produit de base 217 du deuxième des dispositifs de mélange 212.

Plus particulièrement, une voie intermédiaire 232 relie la sortie 119 du premier dispositif de mélange 112 et l'entrée du produit de base 217 du deuxième des dispositifs de mélange 212.

L'entrée du produit d'injection 215 du deuxième dispositif de mélange 212 est alimentée par une voie de deuxième injection 224.

La voie de deuxième injection 224 est ici similaire à celle décrite en regard du premier mode de réalisation d'installation.

Plus particulièrement, la voie de deuxième injection 224 est pourvue d'un dispositif de mesure 226 de la quantité de produit d'injection le traversant, d'une vanne d'injection 228 en aval du dispositif de mesure 226 et, dans le présent exemple, d'une vanne globale d'injection 230 en amont du dispositif de mesure 226.

L'ensemble des vannes 128, 130, 136, 228, 230, plus particulièrement leur déplacement respectif entre une position ouverte et une position fermée, de l'installation de dosage est ici contrôlable par le calculateur 114.

L'ensemble des dispositifs de mesure 126, 134, 226 est apte à transmettre la quantité mesurée respective au calculateur 114.

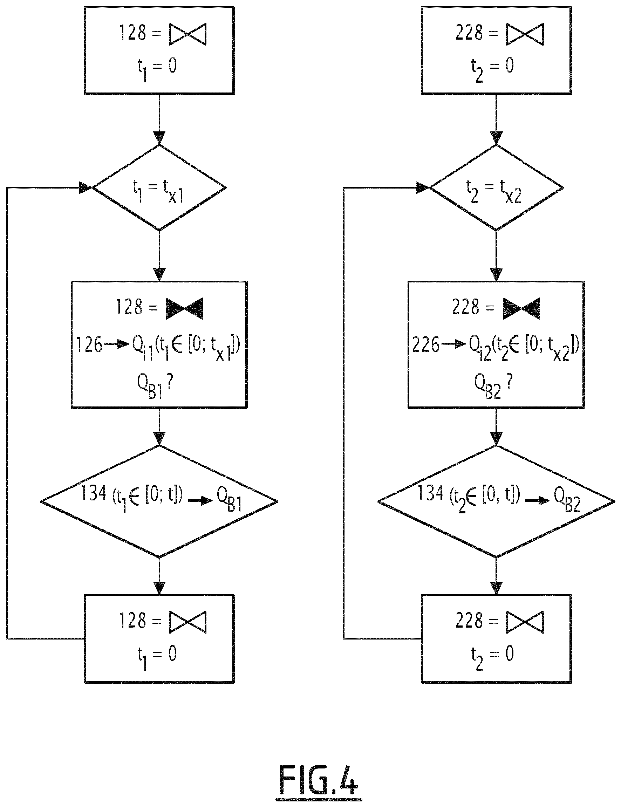

Un procédé de dosage selon un deuxième mode de réalisation va maintenant être décrit en regard de la figure 4.

Le procédé de dosage selon ce deuxième mode de réalisation est apte à être mise en œuvre par l'installation de dosage décrite précédemment selon le deuxième mode de réalisation.

Une installation de dosage 110 telle que décrite en regard du deuxième mode de réalisation est fournie.

L'installation de dosage 110 est ici alimentée en un produit de base, en un produit de première injection et en un produit de deuxième injection.

Plus particulièrement, le premier dispositif 112 de mélange est alimenté en produit de base au niveau de son entrée de base 117 et en produit de première injection au niveau de son entrée de produit d'injection 115. Le deuxième dispositif 212 est alimenté en produit de deuxième injection au niveau de son entrée de produit d'injection 215.

Le procédé de dosage est ici mis en œuvre via le calculateur 114.

Le calculateur 114 comprend ici deux horloges t₁, t₂.

Les vannes globales 130, 136, 230 sont en position ouverte respective.

Les vannes d'injection 128, 228 sont, par exemple, initialement en position fermée.

Le dosage de l'injection du produit de première injection dans le produit de base est réalisé dans le premier dispositif de mélange 112.

Le dosage du produit de première injection dans le produit de base est appelée par la suite premier dosage.

Le premier dosage est réalisé selon le procédé de dosage décrit en regard du premier mode de réalisation.

Le premier dosage est mis en œuvre par le calculateur 114, plus particulièrement en utilisant une première des deux horloges t₁.

Chaque étape d'injection du produit de première injection dans le produit de base de l'itération est réalisée pendant un premier temps donné tₓ₁.

Un mélange intermédiaire constitué de produit de première injection et de produit de base sort donc du premier dispositif de mélange 112 par la sortie119.

Le mélange intermédiaire alimente l'entrée de base 217 du deuxième dispositif de mélange 212 via la voie intermédiaire 232.

En parallèle, un dosage de l'injection du produit de deuxième injection dans le mélange intermédiaire est réalisé dans le deuxième dispositif de mélange 212.

Le dosage du produit de deuxième injection dans le mélange intermédiaire est appelé par la suite deuxième dosage.

Un flux continu de mélange intermédiaire est mis en place, plus particulièrement dans la ligne de base 218 du deuxième dispositif de mélange 212.

Le deuxième dosage est réalisé selon le procédé de dosage décrit en regard du premier mode de réalisation en considérant la voie intermédiaire 232 comme la voie de base du deuxième dispositif de mélange 212.

Le deuxième dosage est mis en œuvre par le calculateur 114, plus particulièrement en utilisant la deuxième des deux horloges t₂.

Chaque étape d'injection du produit de deuxième injection dans le produit de base de l'itération est réalisée pendant un deuxième temps donné tₓ₂.

Le deuxième temps donné tₓ₂ est, par exemple, égal au premier temps donné tₓ₁. Alternativement, le deuxième temps donné tₓ₂ diffère du premier temps donné tₓ₁.

Pendant l'étape de calcul, il est calculé une quantité de base souhaitée en fonction de la quantité de produit de première injection injectée pendant le temps donné Qᵢ₂(t₂∈[0 ; tₓ₂]).

Plus particulièrement, un ratio de quantité souhaité entre le produit de base et le produit de deuxième injection, plus particulièrement du produit de base sur le produit de deuxième injection, est prédéterminé ou programmé préalablement.

Par exemple, le ratio B:I₂ de quantité souhaité du produit de base sur le produit d'injection est supérieur ou égal à 2.

La quantité de produit de base souhaitée Q_{B2} est alors égale au produit du ratio B:I₂ souhaité et de la quantité de produit de deuxième injection injectée pendant le temps donné Qᵢ₂(t₂∈[0 ; tₓ₂]).

On écrit alors : ${Q}_{B 2} = B : {I}_{2} \times {Q}_{i 2} \left({t}_{2}∈\left[0; {t}_{x 2}\right]\right)$

Lorsque la quantité de produit de base mesurée par le dispositif de mesure 134 depuis le début de l'étape de deuxième injection est égale à Q_{B2}, le procédé de deuxième dosage recommence au début de l'étape de deuxième injection.

Les étapes sont réitérées tant qu'un utilisateur souhaite du mélange du produit de base, du produit de première injection et du produit de deuxième injection.

Alternativement, il est connu un ratio de quantité souhaité entre le mélange intermédiaire et le produit de deuxième injection. Au cours de l'étape de calcul, il est alors calculé la quantité de mélange intermédiaire souhaitée. Le procédé de deuxième dosage recommence alors au début de l'étape de deuxième injection lorsque la somme de la quantité de produit de base mesurée par le dispositif de mesure 134 depuis le début de l'étape de deuxième injection et de la quantité de premier produit mesurée par le dispositif de mesure 126 depuis le début de l'étape de deuxième injection est égale à la valeur calculée.

Un dosage du premier produit d'injection est réalisé dans le premier dispositif de mélange 112 et un dosage du deuxième produit d'injection est réalisé dans le deuxième dispositif de mélange 212.

A chaque itération de l'étape d'injection du premier produit, il est injecté une quantité Qᵢ₁(t₁∈[0 ; tₓ₁]) de produit de première injection dans une quantité Q_{B1} de produit de base s'étant écoulé dans le flux continu de produit de base.

A chaque itération de l'étape d'injection du deuxième produit, il est injecté une quantité Qᵢ₂(t₂∈[0 ; tₓ₂]) de produit de deuxième injection dans une quantité Q_{B2} de produit de base s'étant écoulé dans le flux continu de mélange intermédiaire.

Dans un mode de réalisation alternatif non représenté, la sortie 119 du premier dispositif de mélange 112 est reliée fluidiquement à l'entrée d'injection 215 du deuxième dispositif de mélange 112 par une voie. Ladite voie présente alors une vanne d'injection. L'entrée de base 217 est alors alimenté par une voie de deuxième base similaire à la voie de première base 124. Le dosage de l'injection du produit intermédiaire dans la deuxième base est alors similaire à ce qui a été décrit précédemment dans le premier mode de réalisation en considérant le mélange intermédiaire comme le produit d'injection.

Dans l'exemple représenté en regard du deuxième mode de réalisation, il est représenté deux dispositifs de mélange. Cependant, il est entendu que cela peut être généralisé à une installation comprenant un nombre strictement supérieur à deux dispositifs de mélange et à un procédé associé.

Les dispositifs de mélange sont, par exemple, agencés en série selon un sens d'écoulement, les uns à la suite des autres. La sortie de chaque dispositif de mélange, à l'exception du dernier selon la direction d'écoulement, est reliée à une des entrées du dispositif de mélange suivant selon la direction d'écoulement. L'autre des entrées de chaque dispositif de mélange est, par exemple, alimentée via une voie d'alimentation respective.

L'installation de dosage est apte à mettre en œuvre le procédé de dosage tel que décrit précédemment en considérant indépendamment les dosages des injections successives.

Une telle installation de dosage est, par exemple, contrôlée par un unique calculateur.

Pour chaque itération d'étape d'injection du procédé de dosage, il est obtenu un ratio de quantité entre le produit de base et le produit d'injection respectif égal au ratio souhaité.

Ainsi, chaque produit d'injection est dosé comme souhaité dans le produit de base.

Par ailleurs, ce procédé permet un dosage précis dans la mesure où la durée de l'étape d'injection est fixe et ne nécessite pas un ajustement à chaque itération de la durée d'ouverture de la vanne.

## Revendications

1. Procédé de dosage d'un produit d'injection dans un produit de base, notamment pour la production d'un produit de peinture de finition et/ou de protection, comprenant les étapes suivantes :
(a) fourniture d'un dispositif de mélange (12 ; 112, 212) d'un produit d'injection et d'un produit de base,
(b) mise en place d'un flux continu de produit de base dans le dispositif de mélange (12 ; 112, 212), la quantité de produit de base du flux continu s'écoulant étant mesurée,
(c) injection de produit d'injection dans le flux continu du produit de base pendant un temps donné (tₓ ; tₓ₁, tₓ₂),
(d) mesure de la quantité de produit d'injection (Qᵢ(t∈[0 ; tₓ]) ; Qᵢ₁(t₁∈[0 ; tₓ₁]), Qᵢ₂(t₂∈[0 ; tₓ₂])) injecté pendant le temps donné (tₓ ; tₓ₁, tₓ₂),
(e) calcul d'une quantité de produit de base souhaitée (Q_{B} ; Q_{B1}, Q_{B2}) en fonction de la quantité de produit d'injection injecté mesurée (Qᵢ(t∈[0 ; tₓ]) ; Qᵢ₁(t₁∈[0 ; tₓ₁]), Qᵢ₂(t₂∈[0 ; tₓ₂])),
les étapes (c), (d) et (e) étant réitérées lorsque la quantité de produit de base mesurée s'étant écoulée depuis le début de l'étape (c) est égale à la quantité de produit de base souhaitée (Q_{B} ; Q_{B1}, Q_{B2}),
le produit d'injection étant injecté dans le produit de base uniquement pendant l'étape (c),
le dispositif de mélange (12 ; 112, 212) étant alimenté en produit d'injection par une voie d'injection (24 ; 124, 224), la voie d'injection (24 ; 124, 224) étant pourvue d'une vanne d'injection (28 ; 128, 228), la vanne d'injection (28 ; 128, 228) étant déplaçable entre une position ouverte et une position fermée,
la vanne d'injection (28 ; 128, 228) étant ouverte au début de l'étape (c) d'injection et étant fermée à la fin de l'étape (c) d'injection après le temps donné.

2. Procédé de dosage selon la revendication 1, dans lequel, à l'étape (e), la quantité de produit de base souhaitée (Q_{B} ; Q_{B1}, Q_{B2}) est calculée à partir d'un ratio de quantité souhaité (B:I ; B:I₄, B:I₂) entre le produit de base et le produit d'injection.

3. Procédé de dosage selon la revendication 2, dans lequel la quantité de produit de base souhaitée (Q_{B} ; Q_{B1}, Q_{B2}) est égale au produit du ratio souhaité (B:I ; B:I₁, B:I₂) et de la quantité de produit d'injection injectée pendant le temps donné (Qᵢ(t∈[0 ; tₓ]) ; Qᵢ₁(t₁∈[0 ; tₓ₁]), Qᵢ₂(t₂∈[0 ; tₓ₂])).

4. Procédé de dosage selon l'une quelconque des revendications 1 à 3, dans lequel le temps donné (tₓ ; tₓ₁, tₓ₂) est compris entre 0,01 et 10 secondes.

5. Procédé de dosage selon l'une quelconque des revendications 1 à 4, dans lequel la vanne d'injection (28 ; 128, 228) est contrôlable par un calculateur (14 ; 114).

6. Procédé de dosage selon l'une quelconque des revendications 1 à 5, dans lequel le dispositif de mélange (12 ; 112, 212) est alimenté en produit de base par une voie de base (24 ; 124), la voie d'injection étant pourvue d'un dispositif de mesure (26 ; 126, 226) de la quantité de produit d'injection traversant ledit dispositif de mesure (26 ; 126, 226), la voie de base (24 ; 124) étant pourvue d'un dispositif de mesure (34, 134) de la quantité de produit de base traversant ledit dispositif de mesure (34, 134).

## Patentansprüche

1. Dosierverfahren eines Injektionsprodukts in ein Basisprodukt, insbesondere zur Herstellung eines Lackfinishprodukts und/oder Schutzprodukts, umfassend die folgenden Schritte:
(a) Bereitstellen einer Mischeinrichtung (12; 112, 212) eines Injektionsprodukts und eines Basisprodukts,
(b) Herstellen eines kontinuierlichen Stroms von Basisprodukt in der Mischeinrichtung (12; 112, 212), wobei die Menge des sich im kontinuierlichen Strom bewegenden Basisprodukts gemessen wird,
(c) Injizieren von Injektionsprodukt in den kontinuierlichen Strom des Basisprodukts während einer vorgegebenen Zeit (tₓ; tₓ₁, tₓ₂),
(d) Messen der Menge des während der vorgegebenen Zeit (tₓ; tₓ₁, tₓ₂) injizierten Injektionsprodukts (Qᵢ(t∈[0; tₓ]); Qᵢ₁(t₁∈[0; tₓ₁]), Qᵢ₂(t₂∈[0; tₓ₂])),
(e) Berechnen einer gewünschten Menge von Basisprodukt (Q_{B}; Q_{B1}, Q_{B2}) in Abhängigkeit von der gemessenen injizierten Menge des Injektionsprodukts (Qᵢ(t∈[0; tₓ]); Qᵢ₁(t₁∈[0; tₓ₁]), Qᵢ₂(t₂∈[0; tₓ₂])),
wobei die Schritte (c), (d) und (e) wiederholt werden, wenn die seit Beginn des Schritts (c) gemessene abgeflossene Menge von Basisprodukt gleich der gewünschten Menge von Basisprodukt (Q_{B}; Q_{B1}, Q_{B2}) ist,
wobei das Injektionsprodukt nur während des Schritts (c) in das Basisprodukt injiziert wird,
wobei die Mischeinrichtung (12; 112, 212) mit Injektionsprodukt über einen Injektionsweg (24; 124, 224) versorgt wird, wobei der Injektionsweg (24; 124, 224) mit einem Injektionsventil (28; 128, 228) versehen ist, wobei das Injektionsventil (28; 128, 228) zwischen einer geöffneten Stellung und einer geschlossenen Stellung bewegbar ist,
wobei das Injektionsventil (28; 128, 228) zu Beginn des Injektionsschritts (c) geöffnet wird und am Ende des Injektionsschritts (c) nach der vorgegebenen Zeit geschlossen wird.

2. Dosierverfahren nach Anspruch 1, wobei im Schritt (e) die gewünschte Menge von Basisprodukt (Q_{B}; Q_{B1}, Q_{B2}) ausgehend von einem gewünschten Mengenverhältnis (B:I; B:I₁, B:I₂) zwischen dem Basisprodukt und dem Injektionsprodukt berechnet wird.

3. Dosierverfahren nach Anspruch 2, wobei die gewünschte Menge von Basisprodukt (Q_{B}; Q_{B1}, Q_{B2}) gleich dem Produkt des gewünschten Verhältnisses (B:I; B:I₁, B:I₂) und der während der vorgegebenen Zeit injizierten Menge des Injektionsprodukts (Qᵢ(t∈[0; tₓ]); Qᵢ₁(t₁∈[0; tₓ₁]), Qᵢ₂(t₂∈[0; tₓ₂])) ist.

4. Dosierverfahren nach einem der Ansprüche 1 bis 3, wobei die vorgegebene Zeit (tₓ; tₓ₁, tₓ₂) zwischen 0,01 und 10 Sekunden liegt.

5. Dosierverfahren nach einem der Ansprüche 1 bis 4, wobei das Injektionsventil (28; 128, 228) durch einen Rechner (14; 114) steuerbar ist.

6. Dosierverfahren nach einem der Ansprüche 1 bis 5, wobei die Mischeinrichtung (12; 112, 212) mit Basisprodukt über einen Basisweg (24; 124) versorgt wird, wobei der Injektionsweg mit einer Messeinrichtung (26; 126, 226) für die Menge des durch die Messeinrichtung (26; 126, 226) durchströmenden Injektionsprodukts versehen ist, wobei der Basisweg (24; 124) mit einer Messeinrichtung (34, 134) für die Menge des durch die Messeinrichtung (34, 134) durchströmenden Basisprodukts versehen ist.

## Claims

1. A method of dosing an injection product into a base product, in particular for the production of a finishing and/or protective paint product, comprising the following steps:
(a) supply of a mixing device (12; 112, 212) of an injection product and a base product,
(b) setting up a continuous flow of base product in the mixing device (12; 112, 212), the amount of base product of the continuous flow being measured,
(c) injection of the injection product into the continuous flow of the base product for a given time (tₓ; tₓ₁, tₓ₂),
(d) measurement of the quantity of injection product Qᵢ(t∈[0 ; tₓ]); Qᵢ₁(t₁∈[0 ; tₓ₁]); Qᵢ₂(t₂∈[0 ; tₓ₂]); injected during the given time (tₓ; tₓ₁, tₓ₂),
(e) calculation of a quantity of desired base product (Qs; Q_{B1}, Q_{B2}) as a function of the quantity of injected injection product measured Qᵢ(t∈[0 ; tₓ]); Qᵢ₁(t₁∈[0 ; tₓ₁]); Qᵢ₂(t₂∈[0 ; tₓ₂]);
steps (c), (d) and (e) being repeated when the quantity of base product measured having passed since the start of step (c) is equal to the quantity of base product desired (Qs; Q_{B1}, Q_{B2}),
the injection product being injected into the base product only during step (c),
the mixing device (12; 112, 212) being supplied with injection product through an injection channel (24; 124, 224), the injection channel (24; 124, 224) being provided with an injection valve (28; 128, 228), the injection valve (28; 128, 228) being movable between an open position and a closed position,
the injection valve (28; 128, 228) being opened at the start of the injection step (c) and being closed at the end of the injection step (c) after the given time.

2. Dosing method according to claim 1, wherein, in step (e), the desired amount of base product (Q_{B}; Q_{B1}, Q_{B2}) is calculated from a desired amount ratio (B:I ; B:I₁, B:I₂) between the base product and the injection product.

3. Dosing method according to claim 2, wherein the desired amount of base product (Qs; Q_{B1}, Q_{B2}) is equal to the product of the desired ratio (B:I ; B:I₁, B:I₂) and the amount of injection product injected during the given time Qᵢ(t∈[0 ; tₓ]); Qᵢ₁(t₁∈[0 ; tₓ₁]); Qᵢ₂(t₂∈[0 ; tₓ₂]).

4. A dosing method according to any one of claims 1 to 3, wherein the given time (tₓ; tₓ₁, tₓ₂) is between 0.01 and 10 seconds.

5. Dosing method according to any one of claims 1 to 4, wherein the injection valve (28; 128, 228) is controllable by a computer (14; 114).

6. Dosing method according to any one of claims 1 to 5, wherein the mixing device (12; 112, 212) is supplied with base product by a base channel (24; 124), the injection channel being provided with a measuring device (26; 126, 226) for the quantity of injection product passing through said measuring device (26; 126, 226), the base channel (24; 124) being provided with a measuring device (34, 134) to measure the quantity of base product passing through said measuring device (34, 134).
